# EUROPÄISCHE PATENTSCHRIFT

(11) **EP 3 374 748 B1**
(45) Veröffentlichungstag und Bekanntmachung des Hinweises auf die Patenterteilung: **19.08.2020**
(21) Anmeldenummer: 16797488.0
(22) Anmeldetag: 08.11.2016
(51) Int. Cl.: G01M 17/007, G01M 15/02, G01M 15/04, G01M 15/10

(54) **VERFAHREN ZUM ERSTELLEN EINES PRÜFVERSUCHS**
METHOD TO GENERATE A TEST SEQUENCE
MÉTHODE DE GÉNÉRATION D'UNE SÉQUENCE DE TEST

(30) Priorität: 11.11.2015 AT 509652015
(43) Veröffentlichungstag der Anmeldung: 19.09.2018
(73) Patentinhaber: AVL List GmbH, 8020 Graz (AT)
(72) Erfinder: MASCHMEYER, Hauke, 64287 Darmstadt (DE); BEIDL, Christian, 8063 Eggersdorf (AT)
(74) Vertreter: Patentanwälte Pinter & Weiss OG
(86) Internationale Anmeldenummer: PCT/EP2016/076970
(87) Internationale Veröffentlichungsnummer: WO 2017/080999

(56) Entgegenhaltungen:
- WO-A1-2015/011251
- DE-A1-102010 049 690
- DE-A1-102012 014 469
- HIROTAKA KAJI ET AL: "Individual Evaluation Scheduling for Experiment-Based Evolutionary Multi-objective Optimization", 5. März 2007 (2007-03-05), EVOLUTIONARY MULTI-CRITERION OPTIMIZATION; [LECTURE NOTES IN COMPUTER SCIENCE;;LNCS], SPRINGER BERLIN HEIDELBERG, BERLIN, HEIDELBERG, PAGE(S) 645 - 659, XP019077305, ISBN: 978-3-540-70927-5 Absätze [02.1], [02.2]; Abbildungen 1,2

## Beschreibung

Die gegenständliche Erfindung betrifft ein Verfahren zum Erstellen eines Prüfversuchs zum Durchführen eines Prüflaufs für einen Prüfling auf einem Prüfstand zur Untersuchung des Prüflings hinsichtlich einer Zielgröße der Entwicklung.

Es gibt gesetzliche Vorgaben für zulässige Schadstoffemissionen von Fahrzeugen (insbesondere CO₂, CO, NOₓ und Partikelanzahl), z.B. die Verordnung (EG) Nr. 715/2007 des Europäischen Parlaments und des Rates, in der der Euro 5 und Euro 6 Standard definiert sind. Die Einhaltung dieser gesetzlichen Vorgaben durch Fahrzeuge wird bisher mittels standardisierter Testzyklen (wie z.B. dem New European Driving Cycle (NEDC)) auf Prüfständen überprüft. Dazu wird das während des Testzyklus erzeugte Abgas am Prüfstand entnommen und untersucht. Das Problem hierbei ist, dass die Bedingungen am Prüfstand unter dem standardisierten Testzyklus mit den realen Verhältnissen, wenn das Fahrzeug auf einer realen Strecke bewegt wird, nicht vergleichbar sind. Damit kann ein Fahrzeug zwar die gesetzliche Vorgabe am Prüfstand einhalten, aber diese im realen Betrieb trotzdem überschreiten.

Um dem vorzubeugen gibt es das Bestreben des Gesetzgebers, die Überprüfung der vorgegebenen Schadstoffemissions-Grenzwerte vom Prüfstand auf die reale Straße zu verlagern. Das erfordert es, dass die Schadstoffemissionen während einer realen Fahrt des Fahrzeugs auf einer realen Strecke mit Portable Emission Measurement Systems (PEMS) gemessen und überprüft werden. Es gibt damit keinen standardisierten Testzyklus mehr, weil eine Fahrt auf einer öffentlichen Straße mit normalem Verkehr immer zufälligen Einflüssen unterliegt. Das Ziel des Gesetzgebers dabei ist, dass ein Fahrzeug die Grenzwerte der Schadstoffemissionen unter normalen Betriebsbedingungen, und nicht nur am Prüfstand, einhält. Auch für die Auswertung der Schadstoffemissionen nach der Testfahrt werden vom Gesetzgeber Vorgaben gemacht, z.B. die Verwendung bestimmter Datenanalyse Werkzeuge.

Der Gesetzgeber definiert dazu eine Real Driving Emissions (RDE) Testprozedur. Darin sind nur mehr bestimmte Vorgaben für die Fahrzeugmasse, die Umgebungstemperatur und die geographische Höhe unter der die Testfahrt stattfinden muss vorgegeben. Zusätzlich wird noch definiert, zu welchen Anteilen verschiedene Fahrsituationen in der Testprozedur enthalten sein müssen, beispielsweise 33% ± 10% Aufteilung auf Stadt, Land und Autobahn aber zumindest jeweils 16km, Fahrzeuggeschwindigkeit Land im Bereich von 60 - 90km/h, Länge der Testfahrt 90 - 120min, usw. Nachdem diese Überprüfung auf einer öffentlichen Straße stattfinden soll, unterliegt die jeweilige Testfahrt auch zufälligen Einflüssen, wie beispielsweise Fremdverkehr, Ampeln, usw. Daraus ist unmittelbar erkennbar, dass eine reale Testfahrt nicht reproduzierbar ist, sondern jeweils eine mehr oder weniger zufällige Ereigniskette darstellt.

Dieser Paradigmenwechsel hat auch unmittelbaren Einfluss auf die Fahrzeughersteller beim Entwickeln neuer Fahrzeuge.

Bisher konnte jeder Entwicklungsschritt mittels der standardisierten Testzyklen am Prüfstand überprüft werden. Dazu musste lediglich der jeweilige Prüfling nach jedem Entwicklungsschritt dem Testzyklus unterworfen werden und die Schadstoffemissionen untersucht werden. Das geht nun mit der neuen RDE Testprozedur nicht mehr, da grundsätzlich nicht vorhersagbar ist, ob ein neu entwickeltes Fahrzeug am Ende der Entwicklung die RDE Testprozedur durch Einhaltung der Grenzwerte der Schadstoffemissionen übersteht. Erst das fertige Fahrzeug kann auf der realen Straße bewegt werden, d.h. es kann erst ganz zum Schluss der Entwicklung die RDE Testprozedur durchgeführt werden. Wenn das Fahrzeug dieser Überprüfung nicht standhält, hätte das nachvollziehbar enorme Auswirkungen auf den Fahrzeughersteller, der im Extremfall eine jahrelange Entwicklung unter enormen Kosten und Aufwand zumindest teilweise neu aufrollen müsste.

Die Verwendung der bisherigen standardisierten Testzyklen während der Fahrzeugentwicklung hilft dabei auch nicht weiter, da die Einhaltung der Grenzwerte der Schadstoffemissionen unter Anwendung solcher standardisierter Testzyklen nicht automatisch auch die Einhaltung dieser Grenzwerte unter der RDE Testprozedur sicherstellt.

Man könnte nun alle möglichen Betriebszustände eines Fahrzeugs in einem Testszenario zusammenführen und dieses Testszenario für die Überprüfung jedes Entwicklungsschrittes verwenden. Das ist aber kaum zielführend, da die Umsetzung eines solchen Testszenarios auf einem Prüfstand sehr lange dauern würde, was die Entwicklung verzögern würde, die teuren Prüfstandszeiten erhöhen würde und insgesamt sehr aufwändig wäre. Eine willkürliche Erstellung eines Testszenarios ist ebenfalls nicht zielführend, da damit nicht sichergestellt werden könnte, dass damit die Einhaltung der gesetzlichen Vorgaben unter der RDE Testprozedur erreicht wird.

Dazu kommt noch, dass nicht jedes Fahrmanöver, z.B. Beschleunigung aus einer niedrigen Drehzahl heraus, Überholen auf einer Landstraße, Abbiegen im Stadtverkehr, usw., in jedem Fahrzeug dieselbe Auswirkung auf die Schadstoffemission haben muss. Das bedeutet, dass ein Testszenario für ein bestimmtes Fahrzeug geeignet sein kann, aber für ein anderes Fahrzeug nicht.

Grundsätzlich gilt das Obige in gleicher Weise auch für andere Zielgrößen der Entwicklung eines Fahrzeugs, beispielsweise für den Verbrauch eines Fahrzeugs, obwohl es hierzu keine (zumindest noch keine) gesetzlichen Vorgaben gibt. Der Verbrauch ist aber in der Regel auch ein Entwicklungsziel bei der Entwicklung eines Fahrzeugs, weshalb auch hier das Erreichen des angestrebten Verbrauchs, beispielsweise bei der RDE Testprozedur, angestrebt wird.

In gleicher Weise kann es neben der Schadstoffemission oder den Verbrauch auch weitere Zielgrößen der Entwicklung geben, wie beispielsweise die Akustik des Fahrzeugs, die Fahrbarkeit des Fahrzeugs oder die Haltbarkeit des Fahrzeugs. Auch hierbei gilt es geeignete Prüfversuche zu erstellen, die es ermöglichen, schon in frühen Entwicklungsschritte Tests auf einem Prüfstand durchzuführen, um ein späteres Bestehen einer vorgegebenen Testprozedur oder das Einhalten bestimmter Vorgabewerte für die Zielgröße möglichst sicherzustellen.

Aus der DE 10 2012 014 469 A1 ist beispielsweise ein Verfahren zur Versuchsplanerstellung für einen Verbrennungsmotor mittels statistischer Versuchsplanung (DoE) bekannt. Dabei wird ein Wertebereich einer Zielgröße in einem Zielraum festgelegt und es werden die Stellgrößen des Motors so lange verändert, dass die Zielwerte erreicht werden, wobei die Einstellung der Stellgrößen vorzugsweise automatisch mittels eines Reglers erfolgt. Das Verfahren ist allerdings ungeeignet für dynamische Prüfläufe eines Verbrennungsmotors, insbesondere, um reale Einsatzbedingungen eines Fahrzeugs am Prüfstand zu simulieren und eine Aussage über die spätere Einhaltung bestimmter Grenzwerte einer Zielgröße im realen Betrieb des Fahrzeugs treffen zu können.

Es ist daher ein Ziel der Erfindung ein Verfahren anzugeben, das es ermöglicht, Testszenarien für die Fahrzeugentwicklung zu erstellen, mit denen während der Entwicklung Prüfstandsversuche auf einem Prüfstand gemacht werden können, und mit denen ein späteres Bestehen einer vorgegebenen Testprozedur für eine Zielgröße der Entwicklung oder das Einhalten eines Vorgabewertes für eine Zielgröße möglichst sichergestellt werden kann.

Diese Aufgabe wird dadurch gelöst, dass ein vorgegebener Ausgangsprüfversuch in Form einer zeitlichen Sequenz von Fahrmanövern auf dem Prüfstand mit dem Prüfling durchgeführt wird und dabei ein Wert der Zielgröße erfasst wird, wobei die Fahrmanöver aus einer Fahrmanöverdatenbank mit gespeicherten, aus real vermessenen Testfahrten oder durchgeführten Simulationen stammenden, Fahrmanövern ausgewählt werden, dass das aus dem Ausgangsprüfversuch stammende Ergebnis der Erfassung der Zielgröße in Testsegmente unterteilt wird und jedes Testsegment mittels eines vorgegebenen Zielgrößenrelevanzkriteriums auf zielgrößenkritische Relevanz überprüft wird, und dass ein dem Testsegment zugeordnetes Fahrmanöver oder ein zugeordneter Fahrmanöverabschnitt in den Prüfversuch aufgenommen wird, wenn die zielgrößenkritische Relevanz des Testsegments gegeben ist. Durch diese Vorgehensweise wird ein Ausgangsprüfversuch verwendet, um für einen konkreten Prüfling bzw. Fahrzeug nur solche Fahrmanöver bzw.

Fahrmanöverabschnitte in den Prüfversuch aufzunehmen, die eine entsprechende zielgrößenkritische Anregung des Prüflings gewährleisten. Damit kann ein kompakter, kurzer Prüfversuch erstellt werden, der aber hinsichtlich einer Überprüfung der Zielgröße auf Einhaltung bestimmter Testprozeduren oder Vorgaben viel Informationsgehalt liefert. Dieses Vorgehen ermöglicht auch Schwachstellen des Prüflings aufzudecken. Wenn der Prüfling bei charakteristischen Fahrmanövern, wie beispielsweise Beschleunigen aus einer niedrigen Drehzahl heraus, signifikante Zielgrößenwerte, wie z.B. hohe Schadstoffemissionen oder einen hohen Verbrauch, offenbart, dann kann das für die Entwicklung ein wichtiger Input sein, um speziell daran zu arbeiten.

Besonders vorteilhaft ist es, wenn zu einem Fahrmanöver ein Zielgrößenrelevanzwert hinsichtlich einer bestimmten Zielgröße gespeichert wird und für den Ausgangsprüfversuch nur solche Fahrmanöver ausgewählt werden, deren Zielgrößenrelevanzwert einen Zielgrößenvorgabewert überschreitet. Auf diese Weise kann bereits der Ausgangsprüfversuch gestaltet werden, um eine bestmögliche Anregung der jeweiligen Zielgröße sicherzustellen. Das kann es ermöglichen, schon den Ausgangsprüfversuch, und damit die benötigte Prüfstandszeit, möglichst kurz zu halten

Ebenso kann es vorteilhaft sein, wenn zu einem Fahrmanöver bestimmte Randbedingungen des Prüflings gespeichert werden und für den Ausgangsprüfversuch nur solche Fahrmanöver ausgewählt werden, deren Randbedingungen zum Prüfling passen. Auch das ermöglicht es, den Ausgangsprüfversuch sehr gezielt auf einen bestimmten Prüfling abzustellen.

Das Verfahren ist flexibler, wenn ein Fahrmanöver als generisches Fahrmanöver in der Fahrmanöverdatenbank gespeichert wird und aus einer Streckendatenbank mit bekannten Strecken eine Strecke als Fahrmanöver ausgewählt wird, die das generische Fahrmanöver umfasst. Durch Vorgabe bekannter Strecken, kann der Ausgangsprüfversuch sehr variabel gestaltet werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine typischen Prüfstandsaufbau für einen Prüfling,
Fig.2 eine mögliche Ausführung einer Simulationseinheit zum Simulieren einer virtuellen Testfahrt eines virtuellen Fahrzeugs,
Fig.3 das Ergebnis einer Zielgrößenmessung bei Durchführen eines Ausgangsprüfversuchs,
Fig.4 die Elimination gewisser Zielgrößenereignisse in der Zielgrößenmessung,
Fig.5 eine weitere Elimination gewisser Zielgrößenereignisse in der Zielgrößenmessung,
Fig.6 ein mögliches Ergebnis der Elimination gewisser Zielgrößenereignisse in der Zielgrößenmessung und
Fig.7 ein möglicher Ablauf des erfindungsgemäßen Verfahrens.

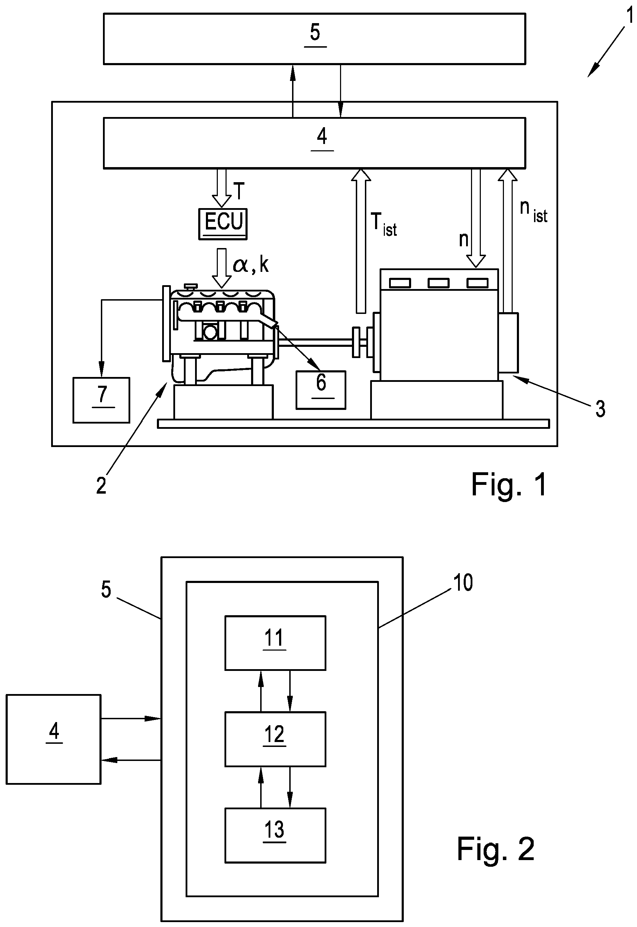

Mit Fig.1 ist ein typischer Prüfstand 1 für einen Prüfling 2, hier ein Motorprüfstand für einen Verbrennungsmotor, dargestellt. Der Prüfling 2 ist mit einer Belastungsmaschine 3 verbunden, beispielsweise über eine Verbindungswelle wie in Fig.1. Der Prüfling 2 kann aber auch ein Antriebsstrang oder ein ganzes Fahrzeug sein. Demgemäß wäre der Prüfstand 1 ein Antriebsstrangprüfstand oder ein Rollenprüfstand, wobei auch mehr als eine Belastungsmaschine, z.B. eine pro angetriebener Halbachse oder pro Achse, vorgesehen sein kann. Der Prüfling 2 wird dabei am Prüfstand 1 gemäß den Vorgaben eines Prüflaufs betrieben, um Aussagen hinsichtlich bestimmter Zielgrößen der Entwicklung des Fahrzeugs zu erhalten, wie z.B. die Schadstoffemission, ein Verbrauch, das akustische Verhalten des Fahrzeugs, die Fahrbarkeit des Fahrzeugs, die Haltbarkeit des Fahrzeugs, usw. Wenn es bei der Zielgröße der Entwicklung um die Schadstoffemissionen eines Verbrennungsmotors bzw. den Verbrauch eines Verbrennungsmotors geht, umfasst der Prüfling 2 auch immer einen Verbrennungsmotor.

Der Prüfstand 1 wird durch eine Prüftstandsautomatisierungseinheit 4 gesteuert. Diese steuert gemäß bestimmter Vorgaben (Prüfversuch) sowohl den Prüflinge 2, als auch die Belastungsmaschine 3. Der Prüfversuch enthält damit alle notwendigen Informationen, um den Test am Prüfstand 1 mit dem Prüfling durchführen zu können. Dazu kann beispielsweise über die Belastungsmaschine 3 eine Drehzahl n des Prüflings 2 eingestellt werden und der Prüfling 2 kann zur Erzeugung eines gewünschten Drehmoments T angesteuert werden, beispielsweise durch Vorgabe einer Drosselklappenstellung α und/oder einer Kraftstoffmenge k durch eine Motorsteuereinheit ECU. Auf einem Rollenprüfstand können auch Fahrroboter vorgesehen sein, die gemäß den Vorgaben des durchzuführenden Prüfversuchs die Bedienelemente des Fahrzeugs, wie Gaspedal, Bremspedal, Gangschaltung, betätigen. Am Prüfstand 1 sind in der Regel auch eine Reihe von (nicht näher dargestellten) Messsensoren vorhanden, mit denen z.B. aktuelle Istwerte des Drehmoments Tᵢₛₜ und der Drehzahl nᵢₛₜ des Prüflings 2 erfasst werden.

Je nach Zielgröße Z der Entwicklung können am Prüfstand 1 entsprechende Messeinheiten für die Zielgröße Z, wie z.B. eine Emissionsmesseinheit 6, der Abgas des Verbrennungsmotors zugeführt wird und die bestimmte Schadstoffemissionen, wie CO₂, CO, NOₓ, Gesamtmasse an Kohlenwasserstoffen (THC) und/oder Partikelanzahl (wie Rußpartikel) misst, und/oder eine Verbrauchsmesseinheit 7, die den Kraftstoffverbrauch des Verbrennungsmotors misst, vorgesehen.

Die Vorgaben des durchzuführenden Prüfversuchs erhält die Prüftstandsautomatisierungseinheit 4 von einer Prüfversuchssteuereinheit 5. Prinzipiell wäre es auch denkbar, dass die Prüftstandsautomatisierungseinheit 4 und die Prüfversuchssteuereinheit 5 in einer einzigen Einheit zusammengeführt sind. Die Prüfversuchssteuereinheit 5 gibt der Prüftstandsautomatisierungseinheit 4 gemäß den Vorgaben des Prüfversuchs zu jeden vorgesehen Zeitschritt k, z.B. jede Millisekunde, bestimmte Sollwerte vor, die dann in die Steuergrößen für den Prüfling 2 und/oder die Belastungsmaschine 3, also z.B. ein Drehmoment T(k), ein Lastwert (wie z.B. eine Drosselklappenstellung) oder eine Drehzahl n(k), umgesetzt werden und die dann von der Prüftstandsautomatisierungseinheit 4 durch Ansteuern des Prüflings 2 und/oder der Belastungsmaschine 3 am Prüfstand 1 eingeregelt bzw. eingestellt werden.

Der Prüfversuch kann in der Prüfversuchssteuereinheit 5 im einfachsten Fall als einfacher wegbasierter oder zeitbasierter Geschwindigkeit- oder Drehmomentverlauf des Fahrzeugs definiert sein, der dann beispielsweise in ein Drehmoment T und eine Drehzahl n des Prüflings 2 umgesetzt wird. Der Prüfversuch ist dann als fest vorgegebener Verlauf definiert.

In einer bevorzugten Ausgestaltung ist in der Prüfversuchssteuereinheit 5 eine Simulationseinheit 10 (Simulationshardware und/oder Simulationssoftware) vorgesehen, mit der mit einer Anzahl von Simulationsmodellen eine Testfahrt eines Fahrzeugs simuliert wird, wie in Fig.2 dargestellt. Dazu ist in der Simulationseinheit 10 beispielsweise als Simulationsmodell ein Fahrermodell 11, ein Fahrzeugmodell 12 und ein Umgebungsmodell 13 implementiert, wobei auch weitere Modelle, wie z.B. ein Reifenmodell, ein Straßenmodell, etc., implementiert sein könnten. Die Simulationseinheit 10 simuliert damit die Fahrt eines virtuellen Fahrzeugs (Fahrzeugmodell 12), das von einem virtuellen Fahrer gesteuert wird (Fahrermodell 11), entlang einer virtuellen Teststrecke (Umgebungsmodell 13), wobei auch bestimmte Ereignisse, wie beispielsweise Verkehrszeichen, Ampeln, Fremdverkehr, usw., simuliert werden können. Ereignisse werden vom virtuellen Fahrer im Fahrermodell umgesetzt. Durch Parametrisierung der Simulationsmodelle können auch verschiedene Einflüsse berücksichtigt werden, wie beispielsweise ein konservativer oder ein sportlicher Fahrer, Straßenbedingungen, Wetter, usw. Ein Teil des Fahrzeugs, wie der Verbrennungsmotor oder ein Antriebsstrang, ist als reale Hardware am Prüfstand 1 als Prüfling 2 physisch aufgebaut und wird mit den Vorgaben der Simulation gemäß dem Prüfversuch am Prüfstand 1 betrieben. Dieses Vorgehen der Durchführung eines Prüfversuches ist auch hinlänglich bekannt und wird häufig als X-In-The-Loop Prüfung bezeichnet, wobei das "X" für den jeweiligen Prüfling 2, der real vorhanden ist, steht. Diese Art der Durchführung eines Prüfversuchs ist sehr flexibel und kommt dem Charakter einer realen Testfahrt mit einem realen Fahrzeug sehr nahe.

Gemäß der gegenständlichen Erfindung geht es nun darum, einen Prüfversuch zu definieren, entweder als virtuelle Testfahrt in einer Simulation oder als einfacher wegbasierter oder zeitbasierter Geschwindigkeit-Drehmomentverlauf, mit dem ein Prüfling 2 so geprüft werden kann, dass ein Fahrzeug mit diesem Prüfling 2 die Vorgaben hinsichtlich einer Zielgröße Z der Entwicklung des Fahrzeugs mit hoher Wahrscheinlichkeit einhält. Im Falle einer Schadstoffemission als Zielgröße Z sollen z.B. bei einer RDE Testprozedur die gesetzlichen Vorgaben hinsichtlich der Schadstoffemissionen eingehalten werden. Um dieses Ziel zu erreichen wird wie nachfolgend beschrieben vorgegangen, wobei ohne Einschränkung der Allgemeinheit eine Schadstoffemission als Zielgröße Z angenommen.

Es wird von einem Ausgangsprüfversuch ausgegangen, der viele verschiedene Fahrmanöver FMx enthält. Als Fahrmanöver FMx wird dabei eine Beschleunigung, eine Verzögerung, ein Stillstand, eine Konstantfahrt, eine Kurvenfahrt, usw. unter bestimmten Randbedingungen, wie beispielsweise Drehzahl, Drehmoment, Lenkeinschlag, Steigung der Straße, Verkehr, usw., verstanden. Ein Fahrmanöver FMx kann dabei auch eine Aneinanderreihung solcher grundlegender Fahrvorgänge sein. Ein Fahrmanöver FMx kann auch in Fahrmanöverabschnitte FMAxy aufgeteilt sein. Ein Fahrmanöver FMx kann z.B. als Anfahren aus dem Stillstand, als Beschleunigen aus einer Kurve, als Änderung der Fahrzeuggeschwindigkeit, als Überholvorgang eines langsamen Fahrzeugs, als Ausrollen zu einer roten Ampel, usw., umgesetzt sein. Jede Fahrt eines Fahrzeugs und somit auch ein Prüfversuch kann als zeitliche Abfolge solcher Fahrmanöver FMx gesehen werden. Es ist unmittelbar einsichtig, dass es eine Fülle an solchen Fahrmanövern FMx geben kann. Die Fahrmanöver FMx können in einer Fahrmanöverdatenbank hinterlegt sein. Gespeicherte Fahrmanöver FMx stammen beispielsweise aus realen vermessenen Testfahrten, aus bereits durchgeführten Simulationen, etc.

Ein Ausgangsprüfversuch wird nun als zeitliche Sequenz solcher Fahrmanöver FMx erstellt. Das kann manuell durch einen Benutzer erfolgen, durch zufällige Auswahl der Fahrmanöver FMx oder durch eine gezielte Auswahl (wie weiter unten noch eingehend beschrieben wird). Wichtig ist an dieser Stelle zu erwähnen, dass die Fahrmanöver FMx so aneinander gefügt werden müssen, dass es im Ausgangsprüfversuch zu keinen Unstetigkeiten kommt, was an sich eine Selbstverständlichkeit ist. Beispielsweise wäre es unrealisitisch, wenn zwischen zwei aufeinander folgenden Fahrmanövern FMx ein abrupter Geschwindigkeitssprung stattfinden würde. Der Ausgangsprüfversuch sollte dabei viele verschiedene Fahrmanöver FMx beinhalten, die vorzugsweise einen größtmöglichen Betriebsbereich (Drehzahl, Drehmoment) des Fahrzeugs abdecken sollen.

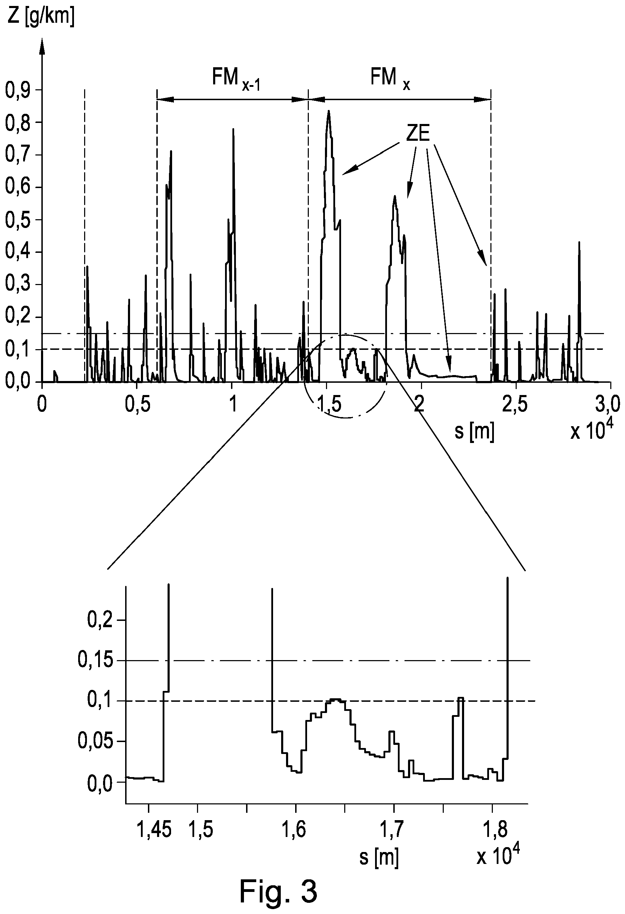

Der derart erstellte Ausgangsprüfversuch wird danach auf dem Prüfstand 1 mit einem konkreten Prüfling 2 abgefahren und es werden dabei die Schadstoffemissionen als Zielgröße Z gemessen. Das Ergebnis einer derartigen Messung wird in Fig.3 am Beispiel der gesamten Menge der Kohlenwasserstoff Emission THC aufgetragen über den zurückgelegten Weg s (wobei in gleicher Weise auch die Zeit aufgetragen sein könnte) dargestellt. Da die Abfolge der Fahrmanöver FMx im Ausgangsprüfversuch bekannt ist, kann jeder Punkt auf der Wegachse (Zeitachse) einem bestimmten Fahrmanöver FMx oder einem Fahrmanöverabschnitt FMAxy des Ausgangsprüfversuchs AV zugeordnet werden. Aus der Darstellung erkennt man viele aufeinanderfolgende Zielgrößenereignisse ZE (durchgezogene Linie), hier Emissionsereignisse. Als Zielgrößenereignis kann ein die Zielgröße Z repräsentierender Wert, beispielsweise die Schadstoffemission, über eine bestimmte Wegstrecke (z.B. alle 50m) aufsummiert werden. Die strichlierte waagrechte Linie markiert einen Vorgabewert für die Zielgrößen Z, beispielsweise den gesetzlichen Grenzwert der Schadstoffemission (hier THC), und die strichpunktierte Linie eine festgelegte Bewertungsgrenze, z.B. das 1,5-fache des gesetzlichen Grenzwertes, wobei vorzugsweise gilt Bewertungsgrenze ≥ gesetzlicher Grenzwert. Die Bewertungsgrenze muss dabei nicht unbedingt über die Wegstrecke s, bzw. über die Zeit konstant sein, sondern kann auch variieren.

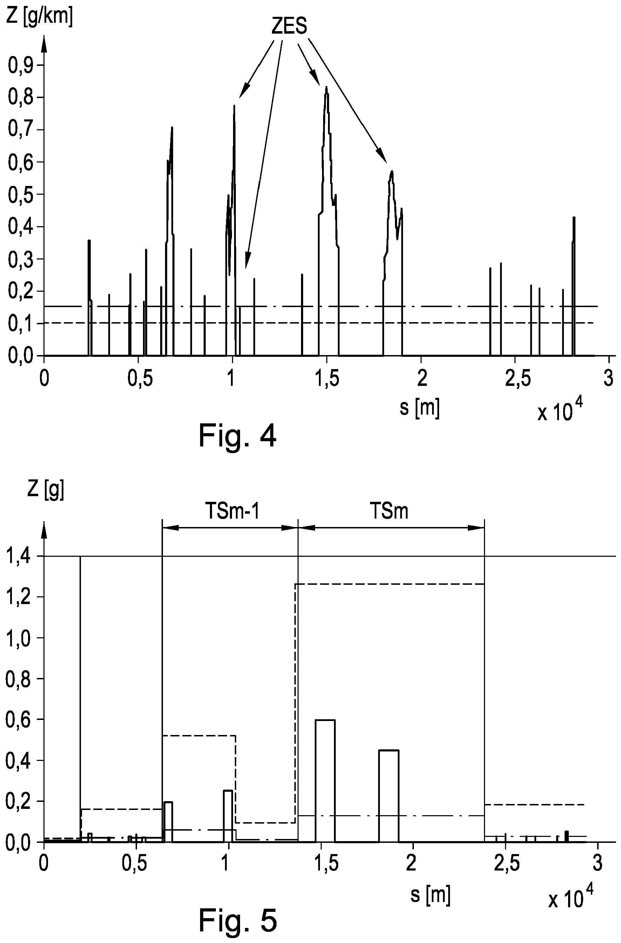

In einem ersten Schritt werden alle Zielgrößenereignisse ZE, die unterhalb der Bewertungsgrenze liegen, logisch auf Null Schadstoffemission gesetzt (angedeutet in Fig.4). Übrig bleiben somit nur solche Zielgrößenereignisse ZE, die hinsichtlich der Zielgröße Z kritische Zielgrößenereignisse darstellen. Es entstehen somit Zielgrößenereignisspitzen ZES über der Bewertungsgrenze und Bereiche dazwischen, die ignoriert werden.

Im nächsten Schritt wird die Wegstrecke s in Testsegmente TSm unterteilt. Dabei können gleichlange oder auch verschieden lange Testsegmente TSm, beispielsweise ein Testsegment = 500m, vorgesehen werden. Hierbei wird natürlich eine günstige Aufteilung in die Testsegmente TSm angestrebt, beispielsweise so dass in einem Testsegment TSm jeweils nur eine Zielgrößenereignisspitze ZES vorhanden ist. Vorzugsweise erfolgt die Einteilung aber gemäß den Fahrmanövern FMx oder allfälligen y Abschnitten der Fahrmanöver FMx, d.h., dass ein Testsegment TSm mit einem Fahrmanöver FMx (wie in Fig.5) oder einem Fahrmanöverabschnitt FMAxy gleichgesetzt wird. Das ermöglicht es, Zielgrößenereignisspitzen unmittelbar und einfach einem Fahrmanöver FMx oder einem Fahrmanöverabschnitt FMAxy zuzuordnen, was die Auswertung erleichtern kann.

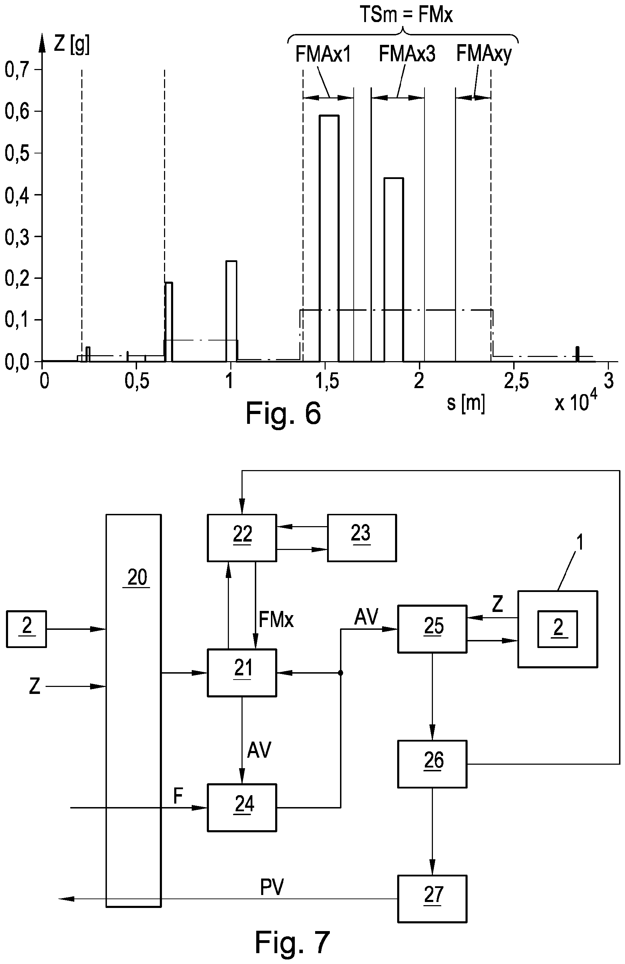

Als nächstes wird für eine Schadstoffemission als Zielgröße Z für jedes Testsegment TSm die Gesamtmasse an Schadstoffemission in diesem Testsegment TSm ermittelt (strichlierte Linie in Fig.5). Ein Anteil der Gesamtmasse wird als Bewertungsmasse festgelegt, beispielsweise 10% der Gesamtmasse (strichpunktierte Linie in Fig.5). Für jede verbliebene Zielgrößenereignisspitze ZES wird nun die zugehörige Ereignismasse ermittelt, indem die Gesamtmasse jeder Zielgrößenereignisspitze ZES bestimmt wird, (durchgezogene Linien in Fig.5) und es werden alle Zielgrößenereignisspitzen ZES logisch auf Null gesetzt, deren Ereignismasse unterhalb der Bewertungsmasse liegen. Damit verbleiben von den vielen Zielgrößenereignisspitzen ZES nur mehr einige wenige, wie in Fig.6 dargestellt.

Die diesen Zielgrößenereignisspitzen zugehörigen Fahrmanöver FMx oder Fahrmanöverabschnitte FMAxy werden dann zum Prüfversuch zusammengefügt, wobei die vorliegende Reihenfolge der Fahrmanöver FMx oder Fahrmanöverabschnitte FMAxy nicht zwingend eingehalten werden muss. Im Beispiel nach Fig.6 entspricht das Teilsegment TSm dem Fahrmanöver FMx, das wiederum in eine Anzahl y von Fahrmanöverabschnitte FMAxy unterteilt ist. Für den Prüfversuch könnte nun das ganze Fahrmanöver FMx herangezogen werden, oder auch nur die Fahrmanöverabschnitte FMAx1, FMAx3, in denen eine Zielgrößenereignisspitze enthalten ist, wobei natürlich auch weitere Fahrmanöverabschnitte FMAxy verwendet werden könnten, beispielsweise um andere Vorgaben einer Testprozedur (wie der RDE Testprozedur) einzuhalten. Dabei gilt es natürlich wieder Unstetigkeiten zwischen aufeinanderfolgenden Fahrmanöver FMX oder Fahrmanöverabschnitte FMAxy im erstellten Prüfversuch zu vermeiden bzw. auszugleichen. Damit verbleiben für den Prüfversuch nur mehr solche Fahrmanöver FMx oder Fahrmanöverabschnitte FMAxy, die für den konkreten Prüfling 2 hinsichtlich der Zielgröße Z eine signifikante Auswirkung haben. Für einen anderen Prüfling 2 oder eine andere Zielgröße Z kann der erstellte Prüfversuch gänzlich anders aussehen, da ein anderer Prüfling 2 für denselben Ausgangsprüfversuch gänzlich andere Zielgrößenereignisse generieren kann. Auf diese Weise kann ein ursprünglich sehr langer Ausgangsprüfversuch auf einen wesentlichen kürzeren Prüfversuch kondensiert werden, ohne dabei hinsichtlich der Überprüfung der Zielgröße Z, beispielsweise durch eine RDE Testprozedur, Einbußen hinnehmen zu müssen. Es können dabei natürlich verschiedene Zielgrößen Z auf diese Weise untersucht werden und der Prüfversuch kann auch aus Zielgrößenereignissen ZE, die aus verschiedenen Zielgrößen Zstammen zusammengesetzt werden. Ein solcher Prüfversuch würde dann mehrere Zielgrößen Z anregen.

Der obige erste Schritt könnte natürlich auch entfallen und es könnte auch, vor allem in Abhängigkeit von der jeweiligen Zielgröße Z, eine andere Auswertemethode als die Emissionsmasse im zweiten Schritte gewählt werden. Allgemein gesprochen wird das aus dem Ausgangsprüfversuch stammende Ergebnis der Messung der Zielgröße Z in Testsegmente TSm unterteilt und jedes Testsegment TSm mittels eines vorgegebenen Zielgrößenrelevanzkriteriums für die Zielgröße Z auf zielgrößenkritische Relevanz überprüft. Im obigen Ausführungsbeispiel sind zwei Zielgrößenrelevanzkriterien festgelegt, nämlich im ersten Schritt die Bewertungsgrenze und im zweiten Schritt die Bewertungsmasse. Die Feststellung der zielgrößenkritischen Relevanz kann somit auch mehrstufig erfolgen. Ist die zielgrößenkritische Relevanz eines Testsegments TSm gegeben, wird das dem Testsegment TSm zugeordnete Fahrmanöver FMx oder der zugehörige Fahrmanöverabschnitt FMAxy in den Prüfversuch PV aufgenommen, ansonsten nicht.

Der auf diese Weise erstellte Prüfversuch PV enthält als Ergebnis die Fahrmanöver FMx und/oder Fahrmanöverabschnitte FMAxy, um die zielgrößenkritischen Betriebszustände eines ganz konkreten Fahrzeugs gezielt anzuregen, was für die Überprüfung des Zielgrößenverhaltens des Fahrzeugs, beispielsweise nach der RDE Testprozedur, entscheidend ist. Mit dem derart erstellten Prüfversuch PV kann daher die Entwicklung des Fahrzeugs in allen Entwicklungsstadien durchgeführt werden und es kann die Wahrscheinlichkeit der Einhaltung gewisser Vorgaben der Zielgröße, beispielsweise gesetzlicher Grenzwerte der Schadstoffemissionen bei einer Überprüfung mit einer RDE Testprozedur, deutlich erhöht werden.

Das gleiche gilt in analoger Weise auch für andere Zielgrößen Z, wie z.B. den Verbrauch, die Fahrbarkeit das akustische Verhalten, die Haltbarkeit, anstelle einer Schadstoffemission.

Das oben beschriebene Verfahren kann noch weiter verbessert werden, wenn die Fahrmanöver FMx in der Fahrmanöverdatenbank auch eine Information zur Zielgrößenrelevanz des jeweiligen Fahrmanövers FMx hinsichtlich einer bestimmten Zielgröße Z enthalten. Der Hintergrund dafür ist der, dass ein bestimmtes Fahrmanöver FMx, wie beispielsweise Beschleunigen aus niedriger Drehzahl, hinsichtlich einer ersten Zielgröße eine hohe Zielgrößenrelevanz haben mag, hinsichtlich einer zweiten Zielgröße hingegen eine niedrige Zielgrößenrelevanz. Die Zielgrößenrelevanz kann dabei z.B. als ganzzahliger, positiver Zielgrößenrelevanzwert angegeben sein.

Zusätzlich können zu den Fahrmanövern FMx in der Fahrmanöverdatenbank auch die jeweiligen Voraussetzungen bzw. Randbedingungen hinterlegt sein, für die das Fahrmanövern FMx Gültigkeit hat. Die Randbedingungen definieren dabei den Prüfling 2 nähre. Beispielsweise kann es Fahrmanöver FMx für Otto- und Diesel-Motoren geben. Diese Unterteilung kann noch fast beliebig verfeinert werden, beispielsweise Otto-Motor mit homogenem Brennverfahren, Abgasturboaufladung und Abgasrückführung. Je nach Prüfling 2 werden dann nur die Fahrmanöver FMx aus der Fahrmanöverdatenbank ausgewählt, die diesen Randbedingungen entsprechen.

Von den Fahrmanövern FMx, die allfälligen Randbedingungen entsprechen, könnten dann für den Ausgangsprüfversuch AV alle ausgewählt werden, die hinsichtlich einer bestimmten Zielgröße Z einen höheren Zielgrößenrelevanzwert aufweisen, als ein Zielgrößenvorgabewert. Auf diese Weise kann schon ein Ausgangsprüfversuch AV erstellt werden, der möglichst nur solche Fahrmanöver FMx enthält, die eine theoretische Zielgrößenrelevanz hinsichtlich der jeweiligen Zielgröße Z aufweisen. Die tatsächliche Zielgrößenrelevanz für den jeweiligen Prüfling 2 zeigt dann die Durchführung des Ausgangsprüfversuchs am Prüfstand 1.

Es ist auch denkbar, dass in der Fahrmanöverdatenbank zum Teil nur generische Fahrmanöver FMx enthalten sind, also beispielsweise nur Konstantfahrt, oder Beschleunigen aus niedriger Drehzahl, usw. Für die Erstellung eines Ausgangsprüfversuch AV und Prüfversuchs PV sind aber spezifische Fahrmanöver erforderlich, also beispielsweise Konstantfahrt mit 60km/h und einer Drehzahl von 1500min⁻¹, oder Beschleunigen von 110km/h bei 1500min⁻¹ auf 130km/h mit Vollgas, usw. Dafür kann eine Streckendatenbank vorgesehen sein, in der vermessene oder schon simulierte Strecken oder erstellte Simulationen gespeichert sind. Vermessene Strecken sind Strecken, die mit einem realen Fahrzeug abgefahren wurden und dabei vermessen wurden, also z.B. Messen von Geschwindigkeit, Drehzahl, Drehmoment, Ereignisse (Ampel, Verkehrszeichen, Verkehr, etc.), Straßenverlauf, usw. Es kann dann zu einem generischen Fahrmanöver FMx, beispielsweise Anfahrt von einer auf grün geschalteten Ampel, eine Strecke aus der Streckendatenbank ausgewählt werden, in der dieses Fahrmanöver FMx vorkommt. Die Strecke, oder ein bestimmter Streckenabschnitt der Strecke (falls diese segmentiert ist), wird dann als spezifisches Fahrmanöver FMx übernommen. Die Fahrmanöver FMx können aber auch als spezifische Fahrmanöver in der Fahrmanöverdatenbank gespeichert sein.

Der mögliche Ablauf des Verfahrens ist im Blockschaltbild nach Fig.7 dargestellt. An einer Benutzerschnittstelle 20 werden Randbedingungen für den Prüfling 2, also z.B. Otto Motor mit Abgasturbolader und Abgasrückführung, und die interessierende Zielgröße Z, z.B. Schadstoffemission oder Verbrauch V eingegeben. In der Ausgangsprüfversuchserstellung 21 werden aus einer Fahrmanöverdatenbank 22 die Fahrmanöver FMx ausgewählt, die zu diesen Randbedingungen passen. Gegebenenfalls kann in der Fahrmanöverdatenbank 22 auch auf eine Streckendatenbank 23 zugegriffen werden, um aus einem generischen Fahrmanöver ein spezifisches Fahrmanöver zu machen. Der derart erstellte Ausgangsprüfversuch AV kann nun optional in einer Vorsimulation 24 auf mögliche Fehler untersucht werden. Dazu kann der Ausgangsprüfversuch AV mit einem vorhandenen, oder über die Benutzerschnittstelle vorgegebenen, Fahrzeugmodell F simuliert werden. Treten dabei Fehler oder Probleme auf, kann der Schritt der Erstellung des Ausgangsprüfversuchs AV in der Ausgangsprüfversuchserstellung 21 wiederholt oder adaptiert werden. Auch manuelle Eingriffe an dieser Stelle sind denkbar. Der Ausgangsprüfversuch AV wird dann im Schritt der Prüflingscharakterisierung 25 am Prüfstand 1 mit dem konkreten Prüfling 2 abgefahren. Dabei werden Werte für die Zielgröße Z, z.B. die Schadstoffemission oder der Verbrauch, messtechnisch erfasst. In einer Auswerteeinheit 26 wird das Ergebnis der Messung bzw. Erfassung der Zielgröße Z mittels eines vorgegebenen Zielgrößenrelevanzkriteriums auf zielgrößenkritische Relevanz überprüft. Fahrmanöver FMx oder Fahrmanöverabschnitte FMAxy mit einer solchen zielgrößenkritischen Relevanz werden dann in einer Prüfversuchserstellung 27 zum Prüfversuch PV zusammengesetzt und als Ergebnis an der Benutzerschnittstelle 20 verfügbar gemacht. Die Fahrmanöver FMx oder Fahrmanöverabschnitte FMAxy mit einer solchen zielgrößenkritische Relevanz könnten auch in die Fahrmanöverdatenbank 22 aufgenommen werden.

## Patentansprüche

1. Verfahren zum Erstellen eines Prüfversuchs (PV) zum Durchführen eines Prüflaufs für einen Prüfling (2) auf einem Prüfstand (1) zur Untersuchung des Prüflings (2) hinsichtlich einer Zielgröße (Z) der Entwicklung, **dadurch gekennzeichnet, dass** ein vorgegebener Ausgangsprüfversuch (AV) in Form einer zeitlichen Sequenz von Fahrmanövern (FMx) auf dem Prüfstand (1) mit dem Prüfling (2) durchgeführt wird und dabei ein Wert der Zielgröße (Z) erfasst wird, wobei die Fahrmanöver (FMx) aus einer Fahrmanöverdatenbank (22) mit gespeicherten, aus real vermessenen Testfahrten oder durchgeführten Simulationen stammenden, Fahrmanövern (FMx) ausgewählt werden, **dass** das aus dem Ausgangsprüfversuch (AV) stammende Ergebnis der Erfassung der Zielgröße (Z) in Testsegmente (TSm) unterteilt wird und jedes Testsegment (TSm) mittels eines vorgegebenen Zielgrößenrelevanzkriteriums auf zielgrößenkritische Relevanz überprüft wird, **und dass** ein dem Testsegment (TSm) zugeordnetes Fahrmanöver (FMx) oder ein zugeordneter Fahrmanöverabschnitt (FMAxy) in den Prüfversuch (PV) aufgenommen wird, wenn die zielgrößenkritische Relevanz des Testsegments (TSm) gegeben ist.

2. Verfahren nach Anspruch 1, **dadurch gekennzeichnet, dass** zu einem Fahrmanöver (FMx) ein Zielgrößenrelevanzwert hinsichtlich einer bestimmten Zielgröße (Z) gespeichert wird und für den Ausgangsprüfversuch (AV) nur solche Fahrmanöver (FMx) ausgewählt werden, deren Zielgrößenrelevanzwert einen Zielgrößenvorgabewert überschreitet.

3. Verfahren nach Anspruch 1, **dadurch gekennzeichnet, dass** zu einem Fahrmanöver (FMx) bestimmte Randbedingungen des Prüflings (2) gespeichert werden und für den Ausgangsprüfversuch (AV) nur solche Fahrmanöver (FMx) ausgewählt werden, deren Randbedingungen zum Prüfling (2) passen.

4. Verfahren nach einem der Ansprüche 1 bis 3, **dadurch gekennzeichnet, dass** ein Fahrmanöver (FMx) als generisches Fahrmanöver in der Fahrmanöverdatenbank (22) gespeichert wird und aus einer Streckendatenbank (23) mit bekannten Strecken eine Strecke als Fahrmanöver (FMx) ausgewählt wird, die das generische Fahrmanöver umfasst.

## Claims

1. A method for constructing a test (PV) for carrying out a test run for a test specimen (2) on a test bench (1), in order to examine the test specimen (2) with respect to a target variable (Z) of the development, **characterized in that** a prespecified output test (AV) in the form of a time sequence of driving maneuvers (FMx) is performed on the test bench (1) with the test specimen (2) and at the same time a value of the target variable (Z) is determined, wherein the driving maneuvers (FMx) are selected from a driving maneuver database (22) with stored driving maneuvers (FMx) that come from real measured test drives or executed simulations, **in that** the result of the determination of the target variable (Z) from the output test (AV) is divided into test segments (TSm) and each test segment (TSm) is checked for target-variable-critical relevance by means of a predetermined target variable relevance criterion, **and in that** a driving maneuver (FMx) assigned to the test segment (TSm) or an assigned driving maneuver segment (FMAxy) is included in the test (PV) if the target-variable-critical relevance of the test segment (TSm) is given.

2. The method according to claim 1, **characterized in that** a target variable relevance value regarding a specific target variable (Z) is stored for a driving maneuver (FMx), and only those driving maneuvers (FMx) of which the target variable relevance value oversteps a target variable specified value are selected for the output test (AV).

3. The method according to claim 1, **characterized in that** specific boundary conditions of the test specimen (2) are stored for a driving maneuver (FMx), and only those driving maneuvers (FMx) of which the boundary conditions match the test specimen (2) are selected for the output test (AV).

4. The method according to any of claims 1 to 3, **characterized in that** a driving maneuver (FMx) is stored as a generic driving maneuver in the driving maneuver database (22), and a route comprising the generic driving maneuver is selected as a driving maneuver (FMx) from a route database (23) comprising known routes.

## Revendications

1. Procédé de création d'un essai (PV) pour effectuer une marche d'essai destinée à un objet d'essai (2) sur un banc d'essai (1), pour examiner l'objet d'essai (2) par rapport à une grandeur cible (Z) du développement, **caractérisé en ce qu'**un essai initial (AV) prédéfini est effectué avec l'objet d'essai (2) sous la forme d'une séquence temporelle de manoeuvres de conduite (FMx) sur le banc d'essai (1), et qu'ainsi une valeur de la grandeur cible (Z) est détectée, les manoeuvres de conduite (FMx) étant sélectionnées à partir d'une base de données de manoeuvres de conduite (22) comportant des manoeuvres de conduite (FMx) enregistrées provenant de parcours de test mesurés en temps réel ou de simulations effectuées, **en ce que** le résultat de la détection de la grandeur cible (Z) provenant de l'essai initial (AV) est divisé en segments de test (TSm) et que chaque segment de test (TSm) est contrôlé quant à sa pertinence critique de grandeur cible au moyen d'un critère prédéfini de pertinence de grandeur cible, **et en ce qu'**une manœuvre de conduite (FMx) associée au segment de test (TSm) ou une partie de manœuvre de conduite (FMAxy) associée est entrée dans l'essai (PV) si la pertinence critique de grandeur cible du segment de test (TSm) est constatée.

2. Procédé selon la revendication 1, **caractérisé en ce qu'**une valeur de pertinence de grandeur cible par rapport à une grandeur cible spécifique (Z) est enregistrée pour une manœuvre de conduite (FMx), et que seules les manoeuvres de conduite (FMx) dont la valeur de pertinence de grandeur cible dépasse une valeur prescrite de grandeur cible sont sélectionnées pour l'essai initial (AV).

3. Procédé selon la revendication 1, **caractérisé en ce que** des conditions aux limites spécifiques de l'objet d'essai (2) sont enregistrées pour une manœuvre de conduite (FMx), et que seules les manœuvres de conduite (FMx) dont les conditions aux limites correspondent à l'objet d'essai (2) sont sélectionnées pour l'essai initial (AV).

4. Procédé selon l'une des revendications 1 à 3, **caractérisé en ce qu'**une manœuvre de conduite (FMx) est enregistrée dans la base de données de manoeuvres de conduite (22) en tant que manœuvre de conduite générique, et qu'un itinéraire est sélectionné en tant que manœuvre de conduite (FMx) à partir d'une base de données d'itinéraires (23) comportant des itinéraires connus, lequel itinéraire comprend la manœuvre de conduite générique.
